(19) Europäisches Patentamt
European Patent Office
Office européen des brevets

(11) Numéro de publication: **0 145 611**
**A1**

# (12) DEMANDE DE BREVET EUROPEEN

(21) Numéro de dépôt: **84420145.9**

(22) Date de dépôt: **29.08.84**

(51) Int. Cl.[4]: **A 01 N 63/00**, A 01 N 59/20, A 01 N 25/32 // (A01N63/00, 59:20, 59:16, 57:12, 47:34, 47:14, 37:36, 37:32),(A01N59/20, 59:16, 57:12, 47:34, 47:14, 37:36, 37:32)

(30) Priorité: **01.09.83 FR 8314056**

(43) Date de publication de la demande: **19.06.85**
**Bulletin 85/25**

(84) Etats contractants désignés: **AT BE CH DE FR GB IT LI**

(71) Demandeur: **RHONE-POULENC AGROCHIMIE, 14-20, rue Pierre Baizet, F-69009 Lyon (FR)**

(84) Etats contractants désignés: **BE CH DE GB IT LI AT**

(71) Demandeur: **Coutant, Christian, 29 Place Victor Hugo, F-51200 Damery (FR)**

(84) Etats contractants désignés: **FR**

(72) Inventeur: **Coutant, Christian, 29 Place Victor Hugo, F-51200 Damery (FR)**

(74) Mandataire: **Brachotte, Charles, RHONE-POULENC AGROCHIMIE P.I.D. BP 9163, F-69263 Lyon Cedex 09 (FR)**

## (54) Compositions phytosanitaires complexes.

(57) Compositions phytosanitaires améliorant les récoltes de vigne, d'arbre fruitiers, etc..., comprenant en association:
- un ou plusieurs fongicides de préférence le folpet
- un ou plusieurs dérivés métalliques
- de l'acide citrique
- un produit laitier.

EP 0 145 611 A1

L'invention a pour objet des compositions phytosanitaires ainsi que le procédé de traitement des plantes avec les dites compositions.

Plus spécialement l'invention a pour objet des compositions phytosanitaires particulièrement adaptées pour le domaine de la viticulture et de l'arboriculture, c'est à dire pour le traitement de la vigne et des arbres à fruits, mais également utilisables pour d'autres cultures.

L'obtention de bonnes récoltes est un problème difficile et de difficulté croissante, et cela spécialement dans le domaine de la viticulture et de l'arboriculture.

Quelques unes des difficultés rencontrées et des buts correspondants de l'invention vont être énoncés ci-après :

On sait lutter contre la chlorose des végétaux ou leur appauvrissement en bois et feuillages, ces phénomènes correspondant à des carences en différents oligoéléments. On sait aussi par ailleurs traiter les végétaux par des compositions fongicides pour lutter contre les champignons parasites (ou cryptogames).

Mais ces traitements étaient jusqu'à présent généralement séparés et un des but de l'invention est d'économiser du temps, de l'énergie et du travail sans diminuer l'efficacité des traitements.

Un autre but de l'invention est d'éviter la phytotoxicité des compositions de traitement des végétaux, notamment la phytotoxicité par brûlure, tel que cela peut arriver lorsqu'on se borne à combiner en un seul traitement des fongicides et des sels minéraux.

Un autre but de l'invention est de rendre les végétaux traités capable de faire face à des maladies fongiques les plus diverses telles que les tavelures du pommier et du poirier, la pourriture grise, les mildious, l'excoriose, le rougeot (ou brenner), le black-rot, la rouille du prunier, l'anthracnose du cerisier, les oïdiums, les monilioses et autres maladies des arbres fruitiers, des

cultures légumières et florales.

Un autre but de l'invention est de délivrer les végétaux de l'invasion par les mousses.

Une autre difficulté lorsqu'on traite la vigne avec des dérivés du fer pour lutter contre la chlorose (carence en fer entraînant une disparition de la couleur verte des plantes) est que les dérivés ferriques entraînent des troubles de fermentation lors de la fabrication du vin, tandis que les dérivés ferreux ont tendance à se transformer en dérivés ferriques surtout sous l'effet du soleil.

Un but de l'invention est donc de fournir des compositions phytosanitaires aptes au traitement des vignes mais n'ayant pas de répercussions néfastes sur la fabrication du vin.

Un autre but de l'invention est de fournir un procédé de traitement phytosanitaire à effets multiples permettant de traiter les végétaux à la fois pour plusieurs maladies, et à la fois à titre préventif et curatif.

Un autre but de l'invention est de permettre une diminution du nombre total de traitements nécessaires à l'égard des végétaux, spécialement de la vigne et des arbres à fruits.

Un autre but de l'invention est de favoriser une meilleure fécondation des fleurs, notamment par élimination de la coulure ou du millerandage. La coulure est le phénomène par lequel des fleurs ne sont pas fécondées et conduisent à une absence de fructification. Le millerandage est le phénomène par lequel certaines baies d'une même grappe sont mal fécondées en sorte que ces baies ou grains restent petits et sans pépins. Ces phénomènes de millerandage et surtout de coulure peuvent avoir des effets extrêmement lourds de conséquences, en diminuant considérablement la récolte de fruits, notamment de raisins ; ils sont souvent assez irréguliers d'une année à l'autre car ils sont fortement influencés par les conditions

atmosphériques. En effet, la coulure et le millerandage proviennent généralement d'une mauvaise émission du pollen ou d'une mauvaise germination du pollen, ceux-ci étant eux-mêmes favorisés par des températures tardivement basses et par l'excès d'humidité. Ces températures basses et cet excès d'humidité sont néfastes en particulier parce qu'ils font que les grains de pollens sont en mauvais état et/ou n'arrivent pas à s'accrocher aux organes femelles. Ces phénomènes de coulure et de millerandage rendent très difficile l'obtention d'une récolte régulière (en quantité) d'une année à l'autre et ceci est particulièrement gênant dans le contexte économique actuel qui requiert bien souvent des normalisations et planifications peu compatibles avec l'irrégularité des récoltes.

D'autres buts et avantages de l'invention sont encore les suivants, notamment dans le cas de la vigne, mais aussi pour les arbres fruitiers :

- élimination aussi complète que possible de la chlorose,
- accélération du cycle de végétation ; cette accélération peut s'élever à une semaine ou plus ; le problème se pose d'autant plus que les traitements antifongiques utilisant du cuivre ont tendance à ralentir le cycle de végétation,
- augmentation du rendement de la récolte à l'hectare, spécialement du rendement moyen sur plusieurs années,
- augmentation de la teneur en sucre des fruits et meilleure qualité des moûts ce qui permet d'augmenter la teneur alcoolique du vin, jusqu'à un ou deux degrés de plus,
- augmentation de l'épaisseur de la peau des fruits ce qui est favorable à une meilleure coloration dans le cas des vins rouges,
- meilleur aoûtement des rameaux (il s'agit de la lignification qui se produit environ au mois d'août).
- vigueur améliorée des feuilles,
- augmentation de la longévité des végétaux,

- amélioration de la qualité des fruits.

Il a maintenant été trouvé que tout ou partie de ces buts pouvaient être atteints grâce aux compositions selon l'invention et aux procédés de traitement des végétaux qui consistent à leur appliquer ces compositions.

Selon un aspect très général ces compositions sont caractérisées en ce qu'elles comprennent, en association :

- un ou plusieurs fongicides
- un ou plusieurs dérivés métalliques, notamment des sels ou complexes métalliques
- un ou plusieurs acides organiques
- un produit laitier, c'est à dire du lait ou un dérivé du lait.

Selon un premier mode avantageux de réalisation de l'invention, on utilise au moins deux fongicides, l'un minéral et l'autre organique.

Parmi les fongicides minéraux on préfère utiliser les fongicides dérivés du cuivre et connus en soi comme ayant une activité fongicide. Comme exemple de tels fongicides on peut citer principalement l'oxychlorure de cuivre, (spécialement l'oxychlorure tétracuivrique et tricalcique), l'hydroxyde cuivrique, l'oxyde cuivreux, le sulfate cupricalcique (bouillie bordelaise séchée), l'oxyquinoléate cuivrique.

Comme fongicides organiques, on peut citer les phosphites organiques (phosethyl), le manèbe, le zinèbe, le métalaxyl, le curzate mais l'on préfère utiliser les fongicides de la famille des phtalimides (plus ou moins hydrogénés) notamment le captane, le captafol et surtout le folpet (connu en France sous le nom de folpel).

Les noms communs des produits phytosanitaires sont répertoriés dans des ouvrages divers, en particulier dans le "Pesticide Manual" Edité par The British Crop Protection Council.

Le folpet a pour formule :

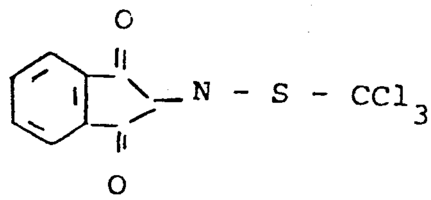

On peut aussi utiliser des associations de fongicides organiques, notamment les association de fongicides de la famille des phtalimides avec d'autres fongicides contenant des oligoéléments tels que le manèbe [polymère d'éthylène bis (dithiocarbamate) de manganèse] ou le zinèbe qui est le dérivé zincique correspondant, ou encore du soufre (sous forme utilisée de manière connue comme fongicide telle que la forme micronisée), ou encore les divers carbamates connus.

Comme sels minéraux utilisables dans l'invention, on peut citer les sels (minéraux ou organiques) acceptables en agriculture de métaux divers, notamment le fer (de préférence sous forme de fer ferreux) et le magnésium, le manganèse, le zinc et autres.

Comme sels particulièrement convenables on peut citer les sulfates, phosphates acétates et carbamates.

Comme acide organique faisant partie des compositions selon l'invention, on utilise avantageusement les acides carboxyliques et plus particulièrement l'acide citrique. Ce dernier est spécialement avantageux par son role antioxydant du fer (inhibition du passage de l'état ferreux à l'état ferrique).

Le produit laitier utilisé dans l'invention est constitué généralement par du lait ou un dérivé du lait. Par dérivé du lait on entend un produit contenant tout ou partie des constituants du lait tel que le lait stabilisé, le lait pasteurisé, le lait stérilisé, le lait déshydraté, le lait en poudre ou en granule, le lait écrémé, le lait demi-écrémé (totalement ou partiellement écrémé).

On peut aussi utiliser la crème ou la caséine ou les caséinates, mais les formes citées précédemment sont préférées.

Le lait est le plus commodément du lait de vache qui est plus économique, mais des laits d'autres origines peuvent être utilisés.

Une composition particulièrement avantageuse de l'invention comprend :

a) folpet
b) oxychlorure cuivrique
c) sulfate ferreux
d) sulfate de magnésium
e) acide citrique
f) lait éventuellement écrémé
g) éventuellement, soufre micronisé.

La concentration d'emploi et les proportions respectives des compositions selon l'invention dépendement de diverses conditions telles que la nature de la plante ou de l'arbre traités, les circonstances de croissance de la plante, le stade et le degré de développement des maladies à combattre.

En général les compositions aqueuses prêtes à l'emploi (également appelées bouillies) comprennent les concentrations suivantes pour 1 hectolitre d'eau :

- 200 à 700 g de fongicide(s)
- 200 à 750 g de dérivés de sel(s) métallique(s)
- 5 à 20 g d'acide organique
- 60 à 250 g de produit laitier.

Plus spécifiquement les compositions (prêtes à l'emploi) préférées selon l'invention contiennent, pour 1 hectolitre d'eau :

a) 200 à 500 g de fongicide organique, de préférence le folpet
b) 50 à 175 g de fongicide à base de cuivre, de préférence d'oxychlorure de cuivre

c) 100 à 300 g de sel de fer, de préférence le sulfate ferreux

d) 100 à 300 g de sel de magnésium, de préférence le sulfate

e) 6 à 18 g d'acide citrique

f) 60 à 250 g de produit laitier ; de préférence il s'agit de lait en poudre, écrémé ou non ; cette teneur pondérale est indiqué pour un produit laitier solide ou quasiment solide ; si du lait liquide était utilisé, les valeurs qui viennent d'être indiquées correspondent à son extrait sec.

De préférence les compositions aqueuses selon l'invention comprennent en outre l'un ou l'autre des constituants suivants :

g) 300 à 1000 g de soufre micronisé (mouillable)

h) 20 à 60 g d'éthylène bis dithiocarbamate de manganèse polymérique,

i) 20 à 60 g d'éthylène bis dithiocarbamate de zinc polymérique.

L'invention concerne également les compositions concentrées où les produits de base se trouvent dans les quantités indiquées ci-avant ou toute autre quantité homothétique (c'est à dire obtenue à partir des quantités indiquées par multiplication par un facteur commun K, K étant un nombre positif quelconque) ; dans de telles compositions les proportions relatives des divers constituants restent donc situées dans les mêmes gammes ; on peut exprimer la constitution de telles compositions en remplaçant les grammes par des parties (en poids).

Les compositions concentrées selon l'invention peuvent être sous forme de liquide, pâte, ou solide, et elles peuvent contenir en outre des supports solides ou liquides, acceptables en agriculture, et des agents tensioactifs acceptables en agriculture. En particulier sont utilisables les supports inertes usuels et les agents tensioactifs usuels.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants. Les compositions selon l'invention peuvent contenir encore d'autres produits phytosanitaires, notamment des insecticides et des régulateurs de croissance.

Selon ce qui a déjà été dit les matières actives utilisés dans l'invention sont généralement associés à des supports et éventuellement à des agents tensioactifs.

Par le terme "support", dans le présent exposé, on désigne une matière organique ou minérale, naturelle ou synthétique, avec laquelle les matières actives sont associées pour faciliter leur application sur le végétal. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau ; solvants organiques).

L'agent tensioactif peut être un agent dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents. La présence d'au moins un agent tensioactif est généralement indispensable.

Les compositions selon l'invention sont, comme cela a déjà été dit, sous des formes assez diverses, solides ou liquides, principalement sous forme de poudres mouillables ou de granulés autodispersibles.

Les suspensions concentrées, qui sont à diluer pour être applicables en pulvérisation, sont préparées de manière à obtenir un produit fluide stable ne se déposant pas (broyage fin) et elles contiennent habituellement de 10 à 75 % de matières actives, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel les matières actives sont peu solubles ou non solubles : certaines matières solides organiques ou des sels minéraux peuvent être dissous dans le support pour aider à empêcher la sédimentation ou comme antigels pour l'eau.

A titre d'exemple, voici une composition de suspension concentrée :

| | |
|---|---|
| - matières actives | 500 g |
| - phosphate de tristyrylphénol polyéthoxylé | 50 g |
| - alkylphénol polyéthoxylé | 50 g |
| - polycarboxylate de sodium | 20 g |
| - éthylène glycol | 50 g |
| - huile organopolysiloxanique (antimousse) | 1 g |
| - polysaccharide | 1,5 g |
| - eau | 316,5 g |

Les poudres mouillables (ou poudre à pulvériser) sont habituellement préparées de manière qu'elles contiennent 20 à 95 % de matières actives, et elles contiennent habituellement, en plus du support solide, de 0 à 5 % d'un agent mouillant, de 1 à 10 % d'un agent dispersant, et, quand c'est nécessaire, de 0 à 10 % d'un ou plusieurs stabilisants et/ou autres additifs, comme des agents de pénétration, des adhésifs, ou des agents antimottants, colorants, etc..

A titre d'exemple, voici diverses compositions de poudres mouillables :

| | |
|---|---|
| - matières actives | 50 % |
| - lignosulfonate de calcium (défloculant) | 5 % |
| - isopropylnaphtalène sulfonate (agent mouillant anionique) | 1 % |
| - silice antimottante | 5 % |
| - kaolin (charge) | 39 % |

Un autre exemple de poudre mouillable à 80 % est donné ci-après :

| | |
|---|---|
| - matières actives | 80 % |
| - alkylnaphtalène sulfonate de sodium | 2 % |
| - lignosulfonate de sodium | 2 % |
| - silice antimottante | 3 % |
| - kaolin | 13 % |

Un autre exemple de poudre mouillable est donné ci-après :

| | |
|---|---|
| - matières actives | 50 % |
| - alkylnaphtalène sulfonate de sodium | 2 % |
| - méthyl cellulose de faible viscosité | 2 % |
| - terre de diatomées | 46 % |

Un autre exemple de poudre mouillable est donné ci-après :

| | |
|---|---|
| - matières actives | 90 % |
| - dioctylsulfosuccinate de sodium | 0,2 % |
| - silice synthétique | 9,8 % |

Une autre composition de poudre mouillable à 40 % utilise les constituants suivants :

| | |
|---|---|
| - matières actives | 400 g |
| - lignosulfonate de sodium | 50 g |
| - dibutylnaphtalène sulfonate de sodium | 10 g |
| - silice | 540 g |

Une autre composition de poudre mouillable à 25 % utilise les constituants suivants :

- matières actives 250 g
- isooctylphénoxy-polyoxyéthylène-éthanol 25 g
- mélange équipondéral de craie de Champagne et d'hydroxyéthylcellulose 17 g
- aluminosilicate de sodium 543 g
- kieselguhr 165 g

Une autre composition de poudre mouillable à 10 % utilise les constituants suivants :

- matières actives 100 g
- mélange de sels de sodium de sulfates d'acides gras saturés 30 g
- produit de condensation d'acide naphtalène sulfonique et de formaldéhyde 50 g
- kaolin 820 g

Pour obtenir ces poudres mouillables, on mélange intimement les matières actives dans des mélangeurs appropriés avec les substances additionnelles. On obtient par là des poudres dont la mouillabilité et la mise en suspension sont avantageuses ; on peut les mettre en suspension avec de l'eau à toute concentration désirée et cette suspension est utilisable très avantageusement en particulier pour l'application sur les feuilles de végétaux.

Les granulés "autodispersibles" (en langue anglaise "dry flowable" ou encore "water dispersible granules" ; il s'agit plus exactement de granulés facilement dispersibles dans l'eau) ont une composition sensiblement voisine de celle des poudres mouillables. Ils peuvent être préparés par granulation de formulations décrites pour les poudres mouillables, soit par voie humide (mise en contact de la matière active finement divisée avec la charge inerte et avec un peu d'eau, par exemple 1 à 20%, ou de solution aqueuse de dispersant ou de l[illegible]t, puis séchage et tamisage), soit par voie sèche (compactage puis broyage et tamisage).

A titre d'exemple, voici une formulation de granulé autodispersible :

| | |
|---|---|
| - matières actives | 800 g |
| - alkylnaphtalène sulfonate de sodium | 20 g |
| - méthylène bis naphtalène sulfonate de sodium | 80 g |
| - kaolin | 100 g |

L'invention a également pour objet un procédé de traitement phytosanitaire a effets multiples consistant à traiter les végétaux à titre préventif et/ou curatif contre plusieurs maladies à la fois.

L'invention concerne encore un procédé de traitement phytosanitaire consistant à appliquer une composition telle que définie ci-avant comprenant un ou plusieurs fongicides, un ou plusieurs sels minéraux, au moins un acide organique et un produit laitier.

Dans le procédé selon l'invention on applique avantageusement les constituants sus-mentionnés sous forme de solution ou suspension aqueuse (bouillie).

La dose ou quantité de matières actives appliquées par hectare (ha) varie aussi selon la plante ou l'arbre traité, l'époque du traitement, les conditions climatiques, les maladies à combattre, et autres.

Habituellement, on utilise les doses suivantes par hectare :

- 1000 à 3500 g de fongicide(s)
- 1000 à 3750 g de sel(s) métallique(s)
- 25 à 100 g d'acide(s) organique(s)
- 300 à 1250 g de produit laitier (extrait sec).

Plus spécifiquement, on applique avantageusement :

- 1000 à 2500 g de fongicide organisue
- 250 à 875 g de fongicide à base de cuivre, de préférence l'oxychlorure
- 500 à 1500 g de sel de fer, de préférence le sulfate ferreux

- 500 à 1500 g de sel de magnésium, de préférence le sulfate
- 30 à 90 g d'acide citrique
- 300 à 1250 g de produit laitier, de préférence de lait en poudre, écrémé ou non,

et éventuellement :

- 1500 à 5000 g de soufre micronisé
- 100 à 300 g d'éthylène bis dithiocarbamate de manganèse polymérique
- 100 à 300 g d'éthylène bis dithiocarbamate de zinc polymérique.

Le procédé de traitement selon l'invention convient particulièrement bien pour la vigne. Suivant les conditions climatiques et notamment selon la température et la pluviosité, on applique avantageusement, en zone tempérée, 6 à 10 traitements espacés de 6 à 10 jours. Le début des traitements se situe généralement à partir de la 3ème feuille étalée. Aux traitements selon l'invention peuvent évidemment s'ajouter tout autre traitement notamment insecticide, acaricide, herbicide etc...

Pour les céréales on se contente généralement d'un ou deux traitements.

Pour les arbres fruitiers, on préfère mettre en oeuvre, comme pour la vigne, 4 à 8 traitements. L'invention s'applique également aux cultures fruitières et légumières, notamment les fraisiers et les cucurbitacées.

L'invention a largement et suffisamment été décrite par ce qui précède, mais pour faciliter encore la compréhension on peut donner quelques précisions dans les exemples suivants (les pourcentages sont des pourcentages pondéraux) :

On réalise une pâte par mélange de :

- 2500 g de poudre mouillable (commerciale) contenant 50 % de folpet
- 500 g de poudre mouillable contenant 30 % d'oxychlorure de cuivre et 10 % de manèbe et 10 % de zinèbe
- 10 litres d'eau.

Dans un réservoir pour pulvérisation on met :

- 500 litres d'eau
- la pâte préparée précédemment.

On prépare par ailleurs un autre mélange de :

- 1000 g de sulfate de fer
- 1000 g de sulfate de magnésium (contenant l'équivalent de 18 % de MgO)
- 50 g d'acide citrique dissous dans 10 l d'eau
- 400 g de lait de vache écrémé en poudre.

L'ensemble est versé à son tour dans le réservoir pour pulvérisation.

On pulvérise sur un hectare de vigne sous une pression de 15 bars.

L'emploi de la composition ci-dessus ou de compositions voisines entrant dans le cadre de l'invention a permis d'obtenir les résultats suivants :

| Année | Montant des récoltes de raisins, en kg/ha, dans la commune de l'inventeur où les autres agriculteurs traitaient par des moyens habituels non conformes à l'invention | |
|---|---|---|
| | Montant pour la commune | Montant pour l'inventeur utilisant les compositions de l'invention |
| 1970 | 11 550 | 20 420 |
| 1971 | 4 760 | 4 840 |
| 1972 | 9 360 | 12 500 |
| 1973 | 11 250 | 15 300 |
| 1974 | 9 500 | 12 190 |
| 1975 | 7 440 | 9 950 |
| 1976 | 8 900 | 10 990 |
| 1977 | 8 470 | 9 320 |
| 1978 | 3 970 | 6 190 |
| 1979 | 10 500 | 11 540 |
| 1980 | 5 820 | 9 640 |
| 1981 | 4 720 | 8 290 |

On remarque que l'effet des compositions de l'invention est plus fort certaines années que d'autres : cela est du à la présence de coulure certaines années. Même les années où l'amélioration de récolte est modérée, la vigne est en meilleure santé ce qui est favorable pour la récolte des années suivantes.

On donne ci-après un autre exemple de composition selon l'invention :

L'ensemble de la composition préparée pèse 1 kg et contient :

- 200 g de folpet
- 26 g d'oxychlorure de cuivre
- 4 g d'acide citrique
- 40 g de lait de vache en poudre demi-écrémé
- 5 g de manèbe
- 5 g de zinèbe
- 80 g de sulfate ferreux heptahydraté
- 80 g de sulfate de magnésium heptahydraté
- 40 g de lignosulfonate de sodium
- 10 g d'alkyl naphtalène sulfonate de sodium
- 100 g de silice
- q.s.p. pour 1000g : kaolin.

Cette composition, dispersée dans 50 l d'eau, est pulvérisée à raison de 500 l/ha et fournit des résultats semblables à ceux décrits dans le premier exemple.

## REVENDICATIONS

1) Compositions phytosanitaires caractérisées en ce qu'elles comprennent en association :

- un ou plusieurs fongicides
- un ou plusieurs dérivés métalliques
- un ou plusieurs acides organiques
- un produit laitier

2) Compositions selon la revendication 1, caractérisées en ce qu'elles comprennent :

- 200 à 700 parties de fongicide(s)
- 200 à 750 parties de dérivés métalliques
- 5 à 20 parties d'acide organique
- 60 à 250 parties de produit laitier (extrait sec)

3) Compositions selon l'une des revendications 1 ou 2, caractérisées en ce qu'elles comprennent :

- un fongicide organique
- un fongicide minéral
- un ou plusieurs sels ou complexes métalliques
- un acide organique
- un produit laitier

4) Compositions selon l'une des revendications 1 à 3, caractérisées en ce que l'acide organique est l'acide citrique.

5) Compositions selon l'une des revendications 1 à 4, caractérisées en ce que le produit laitier est du lait ou petit lait, éventuellement écrémé totalement ou partiellement.

6) Compositions selon l'une des revendications 1 à 5, caractérisées en ce qu'elles comprennent un fongicide à base de cuivre.

7) Compositions selon la revendication 6, caractérisées en ce qu'elles comprennent un fongicide tel que l'oxychlorure de cuivre, l'hydroxyde cuivrique, l'oxyde

cuivreux, le sulfate cupricalcique, l'oxyquinoléate cuivrique.

8) Compositions selon la revendication 7, caractérisées en ce qu'elles comprennent de l'oxychlorure de cuivre.

9) Compositions selon l'une des revendications 1 à 8, caractérisées en ce qu'elles comprennent un fongicide tel que les phosphites organiques, le métalaxyl, le curzate, le manèbe, le zinèbe.

10) Compositions selon l'une des revendications 1 à 9, caractées en ce qu'elles comprennent un fongicide de la famille des phtalimides plus ou moins hydrogénés.

11) Compositions selon l'une des revendications 1 à 10, caractérisées en ce qu'elles comprennent du folpet.

12) Compositions selon l'une des revendications 1 à 11, caractérisées en ce qu'elles comprennent un sel de fer (de préférence un sel ferreux) et/ou de magnésium.

13) Compositions selon l'une des revendications 1 à 12, caractérisées en ce qu'elles comprennent du manèbe et/ou du zinèbe.

14) Compositions selon l'une des revendications 1 à 13, caractérisées en ce qu'elles comprennent du soufre micronisé.

15) Compositions selon l'une des revendications 1 à 14, caractérisées en ce qu'elles comprennent :

- 200 à 500 parties de fongicide organique
- 50 à 175 parties de fongicide à base de cuivre
- 100 à 300 parties de sel de fer
- 100 à 300 parties de sel de magnésium
- 6 à 18 parties d'acide citrique
- 60 à 250 parties de produit laitier.

16) Compositions selon la revendication 15, caractérisées en ce que le fongicide organique est le folpet, que le fongicide à base de cuivre est un oxychlorure et que le produit laitier est du lait ou petit lait, totalement ou partiellement écrémé.

17) Compositions selon l'une des revendications 15 et 16, caractérisées en ce qu'elles comprennent :
- 20 à 60 parties de manèbe
- 20 à 60 parties de zinèbe.

18) Compositions selon la revendication 17, caractérisées en ce qu'elles comprennent 300 à 1000 parties de soufre micronisé.

19) Compositions selon l'une des revendication,s 1 à 18, caractérisées en ce qu'elles sont sous forme de suspensions concentrées, de poudre mouillables ou de granulés autodispersibles.

20) Procédé de traitement des végétaux, notamment de la vigne et des arbres fruitiers, caractérisé en ce qu'on leur applique sur les feuilles :
- 1000 à 3500 g/ha de fongicides(s)
- 1000 à 3750 g/ha de sels métalliques
- 25 à 100 g/ha d'acide organique
- 300 à 1250 g/ha de produit laitier (extrait sec).

21) Procédé selon la revendication 20, caractérisé en ce qu'on applique :
- 1000 à 2500 g/ha de fongicide organique
- 250 à 875 g/ha de fongicide à base de cuivre
- 500 à 1500 g/ha de sel de fer
- 500 à 1500 g/ha de sel de magnésium
- 30 à 90 g/ha d'acide citrique
- 300 à 1250 g/ha de produit laitier.

22) Procédé selon la revendication 21, caractérisé en ce que le fongicide organique est le folpet, que le fongicide à base de cuivre est l'oxychlorure et que le produit laitier est du lait ou petit lait, totalement ou partiellement écrémé.

23) Procédé selon l'une des revendications 20 à 22, caractérisé en ce qu'on applique également 100 à 300 g/ha de manèbe et/ou 100 à 300 g de zinèbe.

24) Procédé de traitement des végétaux, notamment de la vigne et des arbres fruitiers, caractérisé en ce qu'on leur applique une composition selon l'une des revendications 1 à 19.

Office européen des brevets

# RAPPORT DE RECHERCHE EUROPEENNE

0145611

Numéro de la demande

EP 84 42 0145

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | CENTRAL PATENTS INDEX, Basic Abstracts Journal, section C, AGDOC semaine S20, mai 1971, résumé no. 34800, (LONDRES, GB); & JP - A - 71 18 157 (NIHON NOYAKU CO. LTD.) * en entier * | 1-6,19 -21,24 | A 01 N 63/00 A 01 N 59/20 A 01 N 25/32 // (A 01 N 63/00 A 01 N 59:20 A 01 N 59:16 A 01 N 57:12 A 01 N 47:34 A 01 N 47:14 A 01 N 37:36 A 01 N 37:32 ) (A 01 N 59/20 A 01 N 59:16 A 01 N 57:12 A 01 N 47:34 A 01 N 47:14 A 01 N 37:36 A 01 N 37:32 ) |
| A | IDEM | 10 | |
| | --- | | |
| Y | CHEMICAL ABSTRACTS, volume 52, no. 13, 10 juillet 1958, résumé 11337c, (COLUMBUS, OHIO, US); J.G. KANTZES et al.: "Effect of fungicide sprays on disease control and yield of tomatoes at Salisbury, Maryland, 1956", & Trans. Peninsula Hort. Soc., vol. 46, no. 5, 1956, 22-4 * en entier * | 1-6,19 -21 | |
| | --- | | DOMAINES TECHNIQUES RECHERCHES (Int. Cl.4) |
| Y | FR-A- 878 896 (RUMIANCA) * en entier * | 1-6,19 -21 | A 01 N |
| A | | 12 | |
| | --- -/- | | |

Le présent rapport de recherche a été établi pour toutes les revendications

| Lieu de la recherche | Date d'achèvement de la recherche | Examinateur |
|---|---|---|
| LA HAYE | 30-11-1984 | FLETCHER A.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

0145611

Office européen des brevets

# RAPPORT DE RECHERCHE EUROPEENNE

Numéro de la demande

EP 84 42 0145



## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 439 363 (HOECHST)<br>* page 1, colonne de gauche, ligne 4 - colonne de droite, ligne 11; exemples 2C, 3B, 4B, 4D, 5B, 7D; résumé *<br>--- | 1,2,5, 9,12, 13,19, 20,24 | |
| A | CHEMICAL ABSTRACTS, volume 92, no. 15, 14 avril 1980, page 198, résumé 123211b, (COLUMBUS, OHIO, US); A. BOLAY et al.: "Effect of copper treatments on the early reddening of foliage of Merlot grapevines in Tessin", & Rev. Suisse Vitic., Arboric., Hortic. 1979, 11(5), 205-11<br>* en entier *<br>--- | 1-3,6-13,16, 17 | |
| | | | DOMAINES TECHNIQUES RECHERCHES (Int. Cl.4) |
| A | CENTRAL PATENTS INDEX, Basic Abstracts Journal, section C, AGDOC semaine D48, décembre 1981, résumé 88154, (LONDRES, GB); & JP - A - 56 133 202 (KUMIAI CHEM. IND. K.K.)<br>* en entier *<br>----- | 1-3,6, 7,9,12 ,13,19 | |

Le présent rapport de recherche a été établi pour toutes les revendications

| Lieu de la recherche | Date d'achèvement de la recherche | Examinateur |
|---|---|---|
| LA HAYE | 30-11-1984 | FLETCHER A.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82